# EUROPÄISCHE PATENTSCHRIFT

(11) **EP 0 339 441 B1**
(45) Veröffentlichungstag und Bekanntmachung des Hinweises auf die Patenterteilung: **15.06.1994**
(21) Anmeldenummer: 89106961.9
(22) Anmeldetag: 19.04.1989
(51) Int. Cl.: F16H 59/02, G05G 5/06, B60B 33/08

(54) **Kugelraste**
Ball catch
Loqueteau à billes

(30) Priorität: 28.04.1988 DE 3814374
(43) Veröffentlichungstag der Anmeldung: 02.11.1989
(73) Patentinhaber: Schwarzbich, Jörg, D-33615 Bielefeld (DE)
(72) Erfinder: Schwarzbich, Jörg, D-33615 Bielefeld (DE)
(74) Vertreter: Meldau, Gustav, Dipl.-Ing.

(56) Entgegenhaltungen:
- AT-B- 9 377
- DE-U- 8 630 656
- US-A- 2 495 599
- US-A- 3 557 401

## Beschreibung

Die Erfindung bezieht sich auf eine Kugelraste, insbesondere für die Schaltwelle von Kraftfahrzeugen, bei der die Rastkugel unter der Wirkung einer in einer Buchse geführten Druckfeder gegen die Schaltwelle anliegt und die Rastkugel an der Schaltwelle in parallelen Nuten geführt ist und von einer Nute zur anderen, die Zwischenkämme überrollend, einrasten kann, wobei die Rastkugel in einer Kugelhalbschale auf kleinen Lagerkugeln gelagert ist und die Druckfeder auf die Kugelhalbschale wirkt, die an ihrer Außenkante mit einer Erweiterung des Durchmessers versehen ist, die eine freie Beweglichkeit der kleinen Lagerkugeln zuläßt und in ihrem Zentrum mit einer Ausnehmung versehen ist, die eine freie Beweglichkeit der kleinen Lagerkugeln zuläßt und wobei die Kugelhalbschale auf einem Führungsteil sitzt, das seinerseits einen Sitz und eine Führung für die Druckfeder aufweist und in einer Buchse mit Wälzkörpern axial-verschieblich geführt ist.

Auf einem gegenüber dem Gebiet der Erfindung weit abliegendem Gebiet sind Laufrollen bzw. Laufkugeln bekannt, die als Auflagerung für leicht verschiebbare Möbel einzusetzen sind. Diese Laufkugeln sind in vergleichbarer Weise gelagert, wobei die Kugelhalbschale in einer Buchse geführt ist und unter Federdruck steht. Diese federnde Lagerung ist ausschließlich dafür vorgesehen, daß bei Belastung des Möbels, beispielsweise bei einem Stuhl, auf den sich eine Person setzt, die Federung nachgibt und damit dann das Möbelbein unmittelbar auf der Unterlage aufsteht - mit anderen Worten, die "Laufrolle" versenkt wird - so daß eine Verschiebung des Möbels in belastetem Zustand nicht mehr möglich ist. Derartige Laufrollen bei denen die Kugelhalbschale mit ihrem -kurzen- Führungsteil aus einem aus Blech tiefgezogenen Teil besteht, sind ausschließlich nur für senkrechte Belastungen geeignet (US-A-3 557 401).

Die Belastungs- und Verschiebungsverhältnisse bei einer Kugelraste der gattungsgemäßen Art, die mit einer Schaltwelle zusammenwirkt, sind von der vorbeschriebenen Laufrolle bzw. -kugel außerordentlich verschieden. Bei derartigen Kugelrasten kommt es im Zusammenwirken der Schaltwelle äußerst wesentlich darauf an, daß in einem weiten Winkel zur Verschieberichtung der Rastkugel einwirkende Kräfte bzw. Belastungen mit möglichst ebenso geringem Widerstand zu einem nachgebenden Verschieben der Rastkugel führen, wie Kräfte bzw. Belastungen, die in der Richtung der Verschiebung bzw. Schiebelagerung der Kugel einwirken. Das heißt mit anderen Worten, daß der Rastkugel eine Führung zuzuordnen ist, die auch bei sehr stark seitlich einwirkenden Kräften ein Verkanten der Führung vermeidet. Die Erfindung bezieht sich daher auf eine vorteilhafte Weiterbildung des Standes der Technik nach der (DE-U-8 630 656) und hat sich die Aufgabe gestellt, nicht nur die Herstellung derartiger Kugelrasten zu vereinfachen und kostengünstiger auszuführen, sondern auch ihre Funktion zu verbessern.

Zur Lösung dieser Aufgabe ist eine Kugelraste der gattungsgemäßen Art dadurch gekennzeichnet, daß die Kugelhalbschale sowie die Führungsteile als aus Blech tiefgezogene Teile ausgebildet und mittels Schweißung oder Nietung fest miteinander verbunden sind.

Da die beiden Teile, sowohl die Kugelhalbschale als auch das Führungsteil als Teile ausgebildet sind, deren größter Querschnitt an ihrer offenen Seite liegt, geht die Erfindung von der Erkenntnis aus, daß diese beiden Teile die je für sich als aus Blech tiefgezogene Teile ausgebildet werden können. Diese Teile waren bisher aus Vollmaterial gedreht und dementsprechend kostenaufwendig hergestellt, wobei auch noch fertigungsbedingte Toleranzen in Kauf genommen werden mußten. Bei der Herstellung von tiefgezogenen Teilen lassen sich wesentlich geringere Toleranzen einhalten, so daß die beiden tiefgezogenen Teile, die ja jeder für sich als Laufflächen für Wälzlagerkörper dienen, bei Einhaltung sehr geringer Toleranzen besonders gut zur Paarung mit Wälzkörpern und damit zur Ausbildung von Wälzlagern geeignet sind.

Die beiden tiefgezogenen Teile, die Kugelhalbschale und das Führungsteil sind mittels Schweißung oder Nietung fest miteinander verbunden. Dadurch besteht hinsichtlich der Formgebung der beiden einzelnen tiefgezogenen Teile ein erheblicher Freiraum, so daß sie optimal geformt werden können. Dabei ist vorteilhaft, daß durch den Druckpunkt der verbindenden Punktschweißung (oder Nietung) zwischen Kugelhalbschale und Führungsteil die mittlere Kugelkalotte als Ausnehmung in dem Kugelbett erzeugt ist. Dazu ist zweckmäßig das Führungsteil topfförmig ausgebildet, wobei der Boden zur flächigen Anlage an der Kugelhalbschale eingewölbt sein kann.

Weiterhin ist zur Lösung der erfindungsgemäßen Aufgabe eine Kugelraste der gattungsgemäßen Art dadurch gekennzeichnet, daß das Führungsteil mit mindestens einem achsparallelen Schlitz in seiner zylindrischen Wandung versehen und derart aufgeweitet ist, daß es federnd spielfrei die umgebenden Wälzkörper gegen die Innenseite der Buchse drückt.

Diese federnde Ausbildung des Führungsteils ist einerseits einfach herstellbar, andererseits wird dadurch bewirkt, daß die Wälzkörper auf ihren Laufbahnen zwischen der Außenfläche des Führungsteils und der Innenfläche der Buchse spielfrei gelagert sind. Dadurch ist das Führungsteil und damit die gesamte Kugelraste optimal geführt. Bei Wälzkörperlagerungen ist allgemein ein gewisses wenn auch sehr geringes Spiel erforderlich, damit die einzelnen Teile zusammengesetzt werden können und die Wälzkörper in der vorgesehenen Weise abrollen können. Fertigungsbedingt ist dieses unbedingt erforderliche Spiel mit gewissen Toleranzen versehen, so daß beispielsweise bei ungünstiger Paarung der Toleranzen das Spiel verhältnismäßig groß ist und dadurch ein "schlackern" die Folge ist Das ist insbesondere bei einer Kugelraste der gattungsgemäßen Art nicht nur unerwünscht sondern von erheblichen Nachteil, weil dadurch Geräusche entstehen und auch ein vorzeitiger Verschleiß die Folge sein kann. Wenn mindestens ein Teil mit Laufbahnen für Wälzkörper derart ausgebildet ist, daß es federnd die Wälzkörper gegen die gegenüberliegenden Laufbahnen andrückt, ist es nicht nur überflüssig besondere Fertigungstoleranzen einzuhalten sondern es wird dadurch erreicht, daß eine spielfreie Führung vorhanden ist und ein "schlackern" mit entsprechender Geräuschentwicklung und vorzeitiger Verschleiß ausgeschlossen werden.

Nach einer anderen Ausführungsform können Kugelhalbschalen und Führungsteil mittels Niet oder Schraube fest miteinander verbunden sein. Auch dabei kann der Niet- oder Schraubenkopf, in der Kugelhalbschale liegend, als mittlere Kugelkalotte im Kugelbett ausgebildet sein.

Die Herstellung der beiden Teile, der Kugelhalbschale sowie des Führungsteiles, als tiefgezogene Teile ist je in einem Arbeitsgang durchführbar. Es ist erkennbar, daß dadurch eine erhebliche Kosteneinsparung in der Fertigung gegenüber einem etwa gleich geformten Teil erreicht wird, das auf der Drehmaschine gefertigt ist.

Abgesehen davon, ergibt sich auch eine erhebliche Materialersparnis, da praktisch das gesamte eingesetzte Material für die tiefgezogenen Teile verwendet wird und kein Abfall anfällt. Auch lassen sich diese Teile, jedes einzeln für sich, vorteilhaft jedoch nach der festen Verbindung miteinander, vorteilhaft härten, u.a. weil die Materialstärken sehr gleichmäßig sind und eine Härtung von sehr hoher Qualität erreichbar ist. Eine besondere Oberflächenbehandlung insbesondere derjenigen Flächen die als Laufbahnen für die Wälzkörper dienen, ist bei tiefgezogenen Teilen im Gegensatz zu gedrehten Teilen nicht erforderlich, weil die ohne Materialabtrag gepreßten Teile eine blanke und glatte Oberfläche aufweisen.

Wenn es erwünscht ist, daß die Druckfeder, die innerhalb des Führungsteils angeordnet ist, besonders gut geführt ist, kann der Boden des Führungsteils auf seiner Innenseite mit einer vorspringenden Ausformung als Führung für die Druckfeder ausgebildet sein. Dazu kann insbesondere an der Innenseite des Bodens des Führungsteils ein Zylinderteil als Führung für die Druckfeder angeordnet sein. Das auf die Innenseite des Bodens aufgesetzte Zylinderteil kann den Kopf der Niete oder Schraube bilden, die die feste Verbindung zwischen Kugelhalbschale und Führungsteil herstellt. In geringem Abstand vom Boden des topfförmigen Führungsteils kann in dessen Wandung eine Einnehmung als Wiederlager für die Druckfeder ausgebildet sein. Durch diese vorstehend beschriebenen einfachen Maßnahmen wird die Halterung, Lagerung und Führung der Druckfeder wesentlich verbessert.

Um zu erreichen, daß die Rastkugel in der Kugelhalbschale auf dem Kugelbett sicher gehalten und geführt ist, ist es nach einer vorteilhaften Weiterbildung der Erfindung vorteilhaft, daß der obere Abschluß des Kugelbettes durch einen Haltering als Sprengring ausgebildet ist, der in eine Innennut unmittelbar unterhalb des Randes der Kugelhalbschale jedoch außerhalb des Mittelpunktes der Rastkugel eingesetzt ist - im Abstand von den obersten Kugeln des Kugelbettes - und dessen innerer freier Durchmesser geringer ist als der größte Durchmesser der Rastkugel. Nach einer Ausführungsform kann am oberen Rand der Kugelhalbschale ein Haltering für die Rastkugel von einer nach innen gerichteten Randumbördelung an der Schale gehalten sein. Der freie Innendurchmesser des aus nicht härtbarem, weichen Material bestehenden Halteringes ist nach einer Ausführungsform nur etwas geringer als der Durchmesser der Rastkugel, um ein Durchschnappen der Rastkugel beim Einsetzen zu ermöglichen. Dabei kann der Haltering, dessen freier Innendurchmesser mindestens gleich dem Rastkugeldurchmesser ist, mit mindestens drei nach innen stehenden Nasen versehen sein, deren Stirnflächen auf einem kleineren Durchmesser als dem der Rastkugel liegen.

Der Haltering kann auch kegelförmig ausgebildet sein, so daß sein freier Innendurchmesser dem Durchmesser der Rastkugel entspricht und nach dem Einsetzen der Rastkugel unter Verkleinerung seines Innendurchmessers in eine ebene Form gedrückt ist. Wenn der Haltering aus härtbarem Material besteht, kann er mit mindestens zwei einander gegenüberliegenden Einschnapp- und Haltenasen für die Rastkugel versehen sein. Im letzteren Fall ist es sinnvoll, daß Kugelhalbschale, Haltering und Führungsteil aus härtbarem Material bestehen und zusammen, also nach ihrem Zusammenfügen bzw. Zusammenmontieren gemeinsam gehärtet werden. Durch den Haltering am oberen Rand der Kugelhalbschale wird nicht nur verhindert, daß die kleinen Kugeln des Kugelbettes aus der Kugelhalbschale herausfallen können, sondern durch die Anordnung des Halteringes im Abstand vom obersten Rande des Kugelbettes wird erreicht, daß dort ausreichend Raum vorhanden ist um bei Bewegung der Rastkugel, damit Abrollen auf dem Kugelbett und dadurch verursachte Fließbewegungen des Kugelbettes,immer genügend Raum vorhanden ist, damit die kleinen Kugeln des Kugelbettes ausweichen können, um an solche Stellen hinzufließen an denen sie wieder in Eingriff mit der Rastkugel kommen, wobei ein Stau der kleinen Kugeln des Kugelbettes wirksam vermieden wird, und daher auch eine nur teilweise reibende Abwälzung der Rastkugel auf dem Kugelbett vermieden wird bzw. nicht eintreten kann. Weiterhin wird durch die vorstehend beschriebenen verschiedenen Ausführungen des Halteringes erreicht, daß die Rastkugel sicher in der Kugelhalbschale geführt ist und nicht herausfallen kann, wobei die Montage, also das Einsetzen der Rastkugel in die Kugelhalbschale, erheblich vereinfacht und erleichtert ist. Es sind dabei nach der Erfindung Vorschläge gemacht für das Verwenden gehärteter Teile als auch eines nicht gehärteten bzw. nicht härtbaren Halteringes, so daß der Gesamtaufbau den jeweiligen optimalen Bedingungen anzupassen ist.

Bei einer Kugelraste der gattungsgemäßen Art, die im Führungsteil mit mindestens einem achsparallelen Schlitz versehen ist, ist die Herstellung sehr einfach wenn das Führungsteil aus tiefgezogenem Material besteht und beispielsweise zwei achsparallele Schlitze einander gegenüberliegen. Das Führungsteil kann dann aus einem etwa streifenförmigen Roh-Blechteil tiefgezogen werden, wobei sich durch das "Auffalten" der Streifen zum zylinderförmigen Körper des Führungsteils die beiden Schlitze ausbilden. In gleicher Weise läßt sich ein etwa kreuzförmig ausgebildetes Roh-Blechteil tiefziehen zu einem Führungsteil das vier achsparallele Schlitze aufweist.

Bei der Ausführungsform des Führungsteils mit achsparallelen Schlitzen, bei der der hauptsächliche Sinn darin besteht, daß damit das Führungsteil federnd ausgebildet ist und dadurch die Wälzlagerung spielfrei innerhalb der Buchse angeordnet werden kann, liegen die Abwälzbahnen der Wälzkörper zwischen den Schlitzen. Insbesondere bei dieser geschlitzten Ausführung ist daher eine vorteilhafte Weiterbildung möglich, nach der die Abwälzbahnen nicht mehr eine Zylindermantelfläche bilden, sonderen nach einer vorteilhaften Weiterbildung derart ausgebildet sind, daß sie beispielsweise eben oder gar nach innen gewölbt sind, wobei eine Wölbung nach innen zu Rinnen eine besonders vorteilhafte Führung der Wälzkörper gewährleistet. Dabei kann beispielsweise auf die Führung der Wälzkörper in einem besonderen Käfig verzichtet werden. Bei ebener Ausführung der Abrollbahnen der Wälzkörper auf dem Führungsteil ist es möglich, auch die Innenwandung der Buchse mit ensprechend gegenüberliegenden ebenen Abrollbahnen für die Wälzkörper zu versehen, wobei der Innenquerschnitt der Buchse quadratische oder sechseckige Form haben kann. Bei dieser Ausbildung können statt Kugeln Walzen als Wälzkörper eingesetzt werden. Auch dabei ist die Anordnung eines gesonderten Führungskäfigs für die Wälzkörper nicht unbedingt erforderlich.

Insbesondere bei den vorstehend genannten Ausführungsformen der Erfindung ist es sinnvoll, das Führungsteil an dem freien Rand seiner Hülse mit radial nach außen gerichteten Abwinklungen zu versehen, die die Laufbahnen der Wälzkörper begrenzen. Die Anordnung derartiger nach außen gerichtete Abwinklungen ist bei einem Führungsteil, das aus Blech tiefgezogen ist, ohne weitere Schwierigkeiten möglich und kann in einem Arbeitsgang hergestellt werden, wobei ebenfalls Materialverluste durch Spanabheben entfallen.

Die Erfindung wird nachstehend anhand von Ausführungsbeispielen mit Bezug auf die Zeichnungen näher erläutert. In den Zeichnungen zeigen
- Fig. 1: Seitenansicht und Längsschnitt einer zusammengebauten Kugelraste,
- Fig. 2: Seitenansicht und Längsschnitt der inneren Teile einer Kugelraste,
- Fig. 3: Längsschnitt des oberen Abschnittes der inneren Teile einer Kugelraste,
- Fig. 4: Längsschnitt ähnlich Fig. 3,
- Fig. 5: perspektivische schematische Darstellung einer Ausführungsform des Führungsteils,
- Fig. 6: perspektivische schematische Darstellung einer anderen Ausführungsform des Führungsteils,
- Fig. 7: perspektivische schematische Darstellung einer weiteren Ausführungsform des Führungsteils,
- Fig. 8: Querschnitt durch Führungsteil und Buchse zur Darstellung der Lagerung,
- Fig. 9: Querschnitt durch Führungsteil und Buchse nach einer anderen Ausführungsform.

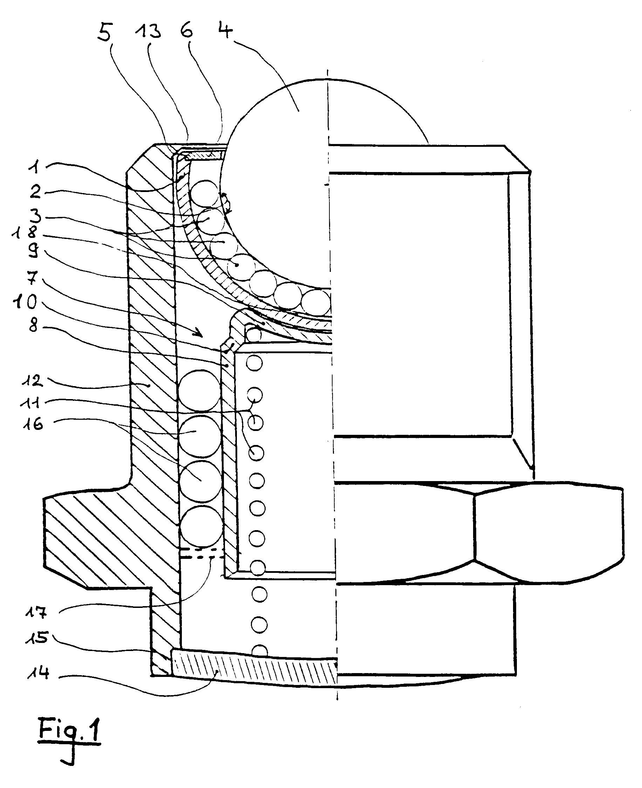

Nach Fig. 1 besteht die Kugelraste aus einer aus Blech tiefgezogenen Kugelhalbschale 1, in der das Lagerbett 2 in Form von kleinen Lagerkugeln 3 ausgebildet ist. In diesem Lagerbett ist die Rastkugel 4 gelagert, die von einem in eine Innennut 5 am oberen Rand der Kugelhalbschale 1 eingesetzten Sprengring 6 gehalten wird. Dieser Sprengring 6 hat in eingesetztem Zustand einen geringeren Innendurchmesser als der Durchmesser der großen Kugel 4.

Die Kugelhalbschale 1 ist vorzugsweise mittels Punktschweißung in ihrem Zentrum mit dem Führungsteil 7 fest verbunden. Das Führungsteil 7 ist in Form eines Topfes ausgebildet, mit zylindrischen Seitenwandungen 8 und einem eingewölbten Boden 9 dessen Form der Wölbung der Kugelhalbschale 1 angepaßt ist, sodaß diese beiden Teile flächig aufeinanderliegen und damit eine gute Abstützung und Verbindung bilden. Der topfförmige Führungsteil 7 ist dicht über seinen Boden 9 mit einer Einnehmung 10 versehen die als Abstandhalter für eine eingesetzte Druckfeder 11 dient.

Diese Kugelraste ist in eine Buchse 12 eingesetzt, die im Inneren einen zylindrischen Querschnitt aufweist. An ihrem einen Ende ist die Buchse 12 mit einem nach innen stehenden Bund 13 versehen, gegen den von innen her die Ränder der Kugelhalbschale 1 oder der dort eingesetzte Sprengring 6 unter dem Druck der Feder 11 anliegen.

Die in das topfförmige Führungsteil eingesetzte Druckfeder 11 stützt sich mit ihrem gegenüberliegenden Ende auf einen Boden in Form einer Sprengscheibe 14 ab, die in eine Nut 15 an den, dem Bund 13 gegenüberliegenden Ende der Buchse 12 eingearbeitet ist. Zwischem dem Führungsteil 7 und der Innenfläche der Buchse 12 sind Wälzkörper 16 in einem Käfig 17 geführt, so daß das Führungsteil und damit die Kugelhalbschale gegen den Druck der Feder 11 leicht beweglich in die Buchse 12 einzudrücken sind. Auch eine sehr stark seitlich auf die Rastkugel 4 wirkende Kraft vermag aufgrund dieser Lagerungen mit Wälzkörpern 16 zwischen Führungsteil 7 und Buchse 12 ein Verkanten und damit Erschweren der Verschiebebewegung der Rastkugel und ihrer Halterung nicht zu bewirken.

In bekannter Weise ist im Zentrum der Kugelhalbschale eine vertiefte Kalotte 18 ausgebildet und am oberen Rand der Kugelhalbschale 1 ist ein kugelfreier Raum 19. Aufgrund dieser Anordnung von Kalotte 18 und freiem oberen Randraum 19 sind die kleinen Kugeln 3 des Lagerbettes 2 in allen Richtungen frei beweglich und fließfähig, so daß die Rastkugel sich in jeder Weise drehen kann, ohne daß an irgendeiner Stelle, aufgrund eines Staus, in ihrem Lagerbett eine Gleitreibung anstatt einer Rollreibung oder einer Abwälzreibung entsteht.

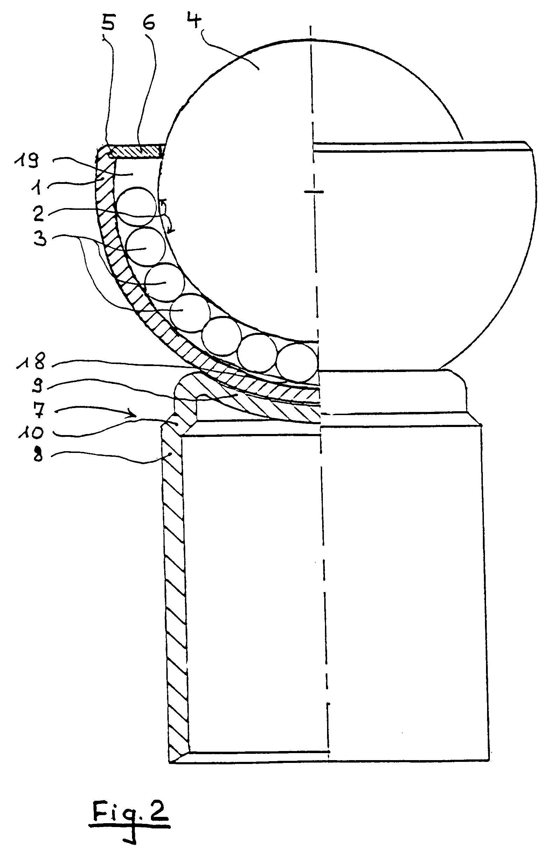

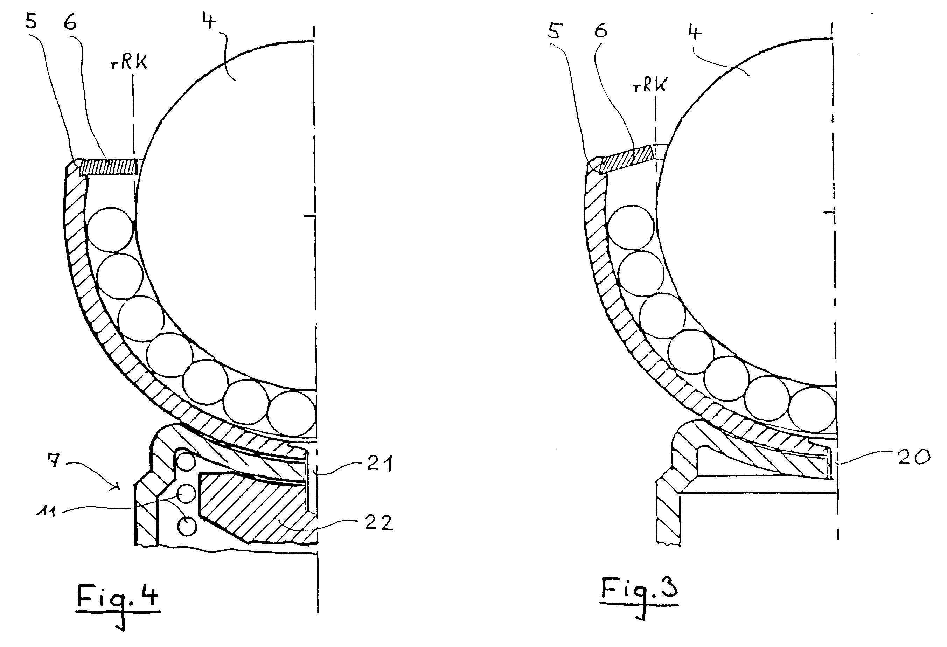

In dem Ausführungsbeispiel nach den Figuren 1 und 2 ist dargestellt, daß der Sprengring 6, der die Rastkugel 4 in der Kugelhalbschale hält und ein Ausfließen des Lagerbettes 2 verhindert, sich etwa in Richtung der Schnittebene der Kugelhalbschale erstreckt, wobei sein freier Innendurchmesser geringer ist als der größte Durchmesser der Rastkugel 4. Das Einsetzen dieses Sprengringes 6 ist nicht ganz so einfach, weil nicht sehr viel Raum zum Einsetzen zur Verfügung steht. Es wird daher nach der Erfindung eine weitere Lösung entsprechend den Figuren 3 und 4 vorgeschlagen. Aus Fig. 3 ist erkennbar, daß der Sprengring 6 schwach kegelförmig ausgebildet ist, so daß er zum Zentrum hin nach außen ansteigt. Der größte Durchmeser rRK der Rastkugel 4 ist mit einer gestrichelten Linie angedeutet und der kleinste Innendurchmesser des Sprengringes 6 an seiner unteren Kante ist im eingesetzten Zustand entsprechend Fig. 3 größer als der größte Durchmesser der Rastkugel 4. Die Rastkugel kann also nach dem Einsetzen des Sprengringes 6 in die Nut 5 eingesetzt werden, nachdem die Kugelhalbschale 1 mit den kleinen Lagerkugeln 3 gefüllt ist. Nach dem Einsetzen der Rastkugel 4 wird der Sprengring 6 in eine ebene Lage entsprechend der Fig. 4 unter Verformung eingedrückt, so daß danach sein freier Innendurchmesser kleiner ist als der größte Durchmesser der Rastkugel 4 und damit ein Halt der Rastkugel 4 in ihrem Lagerbett gesichert ist. Das setzt voraus, daß der Sprengring 6 verformbar ist und nach dem Eindrücken in die ebene Lage entsprechend Fig. 4 diese Form und Lage beibehält. Der Sprengring 6 ist dazu entweder aus dünnem und/oder aus genügendem weichen Material hergestellt.

Bei der Ausführungsform des Sprengringes 6 nach den Figuren 1 und 2 besteht auch die Möglichkeit, daß der Sprengring derart ausgebildet ist, daß im eingesetztem Zustand sein freier Innendurchmesser zwar geringer ist als der Durchmesser der Rastkugel, jedoch nur soviel geringer daß die Rastkugel noch "eingeschnappt" werden kann, wobei es hilfreich sein kann, wenn die Innenseite des Sprengringes 6 etwas abgeschrägt ist, so daß die Unterkante einen geringeren freien Durchmesser aufweist als die Oberkante der Innenfläche. Da sowohl an dem Führungsteil 7 als auch an der Kugelhalbschale 1 die Abrollbahnenfür die Wälzkörper und zwar die Kugeln 16 an dem Führungsteil und die kleinen Lagerkugeln 3 in der Kugelhalbschale, ausgebildet sind, ist es erforderlich diese Teile nach dem Formen, nach dem Tiefziehen,zu härten. Dieses Härtungsverfahren kann durchgeführt werden, nachdem beide Teile miteinander verbunden sind, beispielsweise durch Punktschweißen. Dadurch wird eine nicht unerhebliche Verbesserung der Wirtschaftlichkeit im Herstellungsverfahren erreicht. Es läßt sich sogar der Sprengring 6 im eingesetztem Zustand mithärten, wenn er derart ausgebildet ist, wie das im unmittelbar zuvorstehenden Absatz beschrieben ist.

Anstatt an der Innenkante der Kugelhalbschale 1 einen Sprengring 6 in eine Innennut 5 einzusetzen kann nach der Erfindung der obere Rand der Kubelhalbschale auch derart ausgebildet sein, daß dort nach innen eingedrückte Vorsprünge angeordnet sind, die den Sprengring 6 in seiner Lage halten. Diese Vorsprünge können derart ausgebildet sein, daß sie ein Einschnappen der Rastkugel 4 zulassen und diese nach dem Einschnappen sicher halten. In gleicher Weise ist es nach der Erfindung ebenfalls möglich, anstelle des Bundes 13 an der Buchse 12 nach innen gerichtete Vorsprünge anzuordnen, die eingedrückt werden, nachdem die Kugelhalbschale eingesetzt ist.

Die Verbindung zwischen Kugelhalbschale 1 und Führungsteil 7 kann, wie schon gesagt, mittels Punktschweißung erfolgen. Dabei ist es möglich auch gleichzeitig die zentrale eingesenkte Kalotte 18 mittels der Punktschweißelektrode zu erzeugen bzw. einzusenken. Nach einem anderen Ausführungsbeispiel sind Kugelhalbschale und Führungsteil mittels eines zentral angeordneten Niets 20 miteinander fest verbunden. Auch bei dieser Art von Verbindung ist es möglich beim Anbringen und Einsetzen des Niets 20 die zentrale Kugelkalotte 18 gleichzeitig in der Kugelhalbschale einzusenken. Nach einer weiteren Ausführungsform sind Kugelhalbschale und Führungsteils mittels einer Schraube 21 miteinander verbunden, wobei im Fig. 4 dargestellten Ausführungsbeispiel der Kopf der Schraube 21 von der Seite der Kugelhalbschale her eingesetzt ist und der Schaft der Schraube 21 die Kugelhalbschale und das Zentrum des Führungsteils durchdringt und in eine Mutter bzw. in ein Gegenstück 22 eingeschraubt ist, daß unterhalb des Bodens 9 des Führungsteils an diesen anliegt. Dieses Gegenstück 22 ist derart ausgebildet, daß es teilweise die nach innen gerichtete Wölbung des Bodens des Führungsteiles enthält und an seinem Umfang zumindest in einem zum Boden hin gerichteten Teil den Raum begrenzt den die Druckfeder 11 in Anspruch nimmt. Dadurch kann eine Führung oder auch zusätzliche Halterung der Feder 11 im Bereich ihrer letzten Windungen erfolgen. Nach der vorhergehenden Beschreibung ist auch erkennbar, daß die Verbindung zwischen Führungsteil und Kugelhalbschale auch in anderer Weise ausgeführt sein kann, beispielsweise in der Art, daß von dem Teil 21 ein zentraler Nietstift aufragt, durch die Bohrung im Boden 9 des Führungsteils 7 und in der Kugelhalbschale 1 hindurchgeführt wird und dann oberhalb der Kugelhalbschale zum Nietkopft verformt wird.

Die Wälzkörper oder Kugeln 16 die das Führungsteil 7 im Inneren der Buchse 12 lagern, sind in einen Käfig 17 geführt, der ein Verschieben einzelner Kugeln oder gar Kugelreihen gegeneinander verhindert. Diese Anordnung ist deshalb außerordentlich wesentlich, weil bei einer Belastung der Rastkugel 4 durch eine sehr schräg seitwärts gerichtete Kraft ein Verkanten des Führungsteils eintreten kann und dadurch an bestimmten Umfangsbereichen des Führungsteils, aufgrund des erforderlichen Lagerspiels, die Kugeln 16 nicht gehalten sind und sich in Richtung der Schwerkraft gegenüber den benachbarten gehaltenen bzw. eingeklemmten Kugeln verschieben. Bei der nächsten axialen Bewegung, also beim Eindrücken oder Ausschieben der Rastkugel unter der Wirkung der Druckfeder 11, hindern dann diese verschobenen Kugeln 16 die Bewegung der Rastkugel.

Aufgrund ungünstiger Toleranzpaarungen, insbesondere wenn ausschließlich höchste Negativtoleranzen aufeinandertreffen oder auch unter anderen ungünstigen Voraussetzungen kann der Fall eintreten, daß sich der gesamte Kugelkäfig mit den Kugeln 16 gegenüber dem Führungsteil und der Buchse frei verschiebt. Auch danach erfolgt eine erhebliche Behinderung der Bewegung des Führungsteils und damit der Rastkugel zumindest bei der auf das Verschieben des Käfigs folgenden Bewegung. Eine starke Hemmung des Schaltvorgangs ist dann die Folge oder gar ein ungenaues Einrasten in die nächste Nut seitens der Rastkugel. Hier bietet die Anordnung nach der Erfindung eine sehr vorteilhafte Weiterbildung dadurch, daß das Führungsteil 7 federnd ausgebildet werden kann. Dazu sind in dem Führungsteil ein oder mehrere achsparallele Schlitze 23 angeordnet und das Führungsteil ist derart ausgebildet, daß sein Außendurchmesser größer ist als der größte Innendurchmesser zwischen den Lagerkörpern bzw. Lagerkugeln 16. Aufgrund der Anordnung der Schlitze legt sich das Führungsteil nach dem Einführen in die Buchse federnd gegen die Lagerkörper bzw. Lagerkugeln 16 und hält diese kraftschlüssig. Es besteht dann keinerlei Spiel mehr zwischen den auf der Außenseite des Führungsteils ausgebildeten Rollbahnen und den Wälzkörpern einerseits und den auf der Innenseite der Buchse ausgebildeten Führungsbahnen und den Wälzkörpern andererseits. Die Wälzkörpern sind zwischen Führungsteil und Buchse gewissermaßen eingeklemmt. Es ist erkennbar, daß unter diesen Bedingungen ein Verschieben einzelner Kugeln oder Kugelreihen gegenüber benachbarten Kugeln in keinem Zustand mehr möglich ist. Diese besondere Art der Ausführung der Lagerung gestattet es sogar, daß auf einen Kugelkäfig verzichtet werden kann.

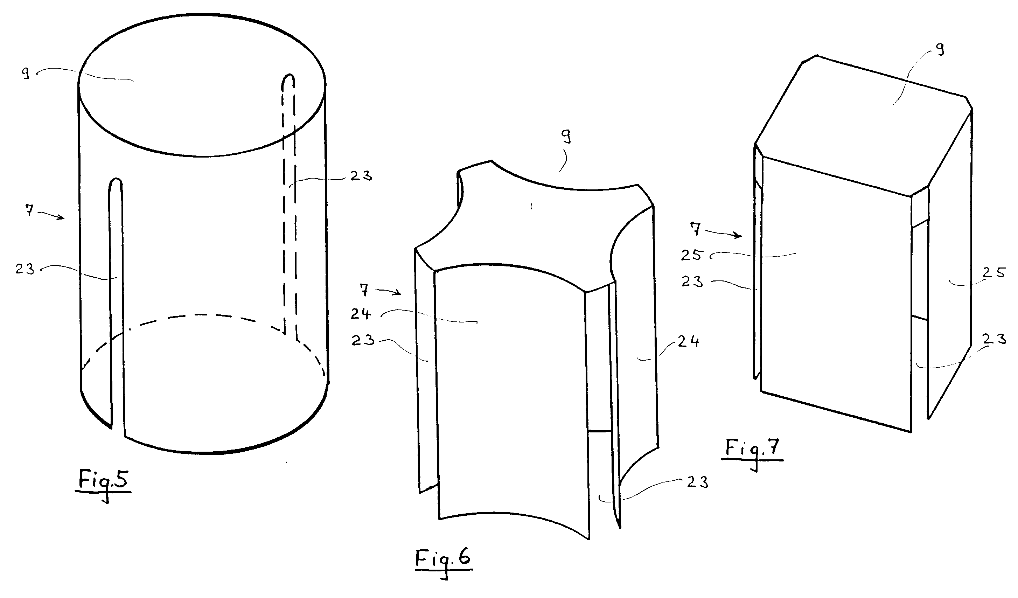

In Fortführung dieser besonders vorteilhaften Weiterbildung nach der Erfindung ist nach Fig. 6 das Führungsteil derart ausgebildet, daß die Rollbahnen für die Kugeln 16 als nach innen eingewölbte Wandungsteile 24 zwischen den Schlitzen 23 angeordnet sind. Diese Wandungsteile 24 sind nach außen federnd ausgebildet und legen sich daher eng gegen die Kugeln an, so daß die Kugeln 16 nicht nur ständig kraftschlüssig geführt sind und damit daran gehindert sind in axialer Richtung zu verschieben, sondern aufgrund der nach innen gewölbten Ausbildung der Wandungsteile 24 mit den Rollbahnen für die Kugeln wird auch wirksam eine Drehbewegung des Führungsteils 7 verhindert. Einen Schnitt durch eine derartige Ausführungsform zeigt die Fig. 8.

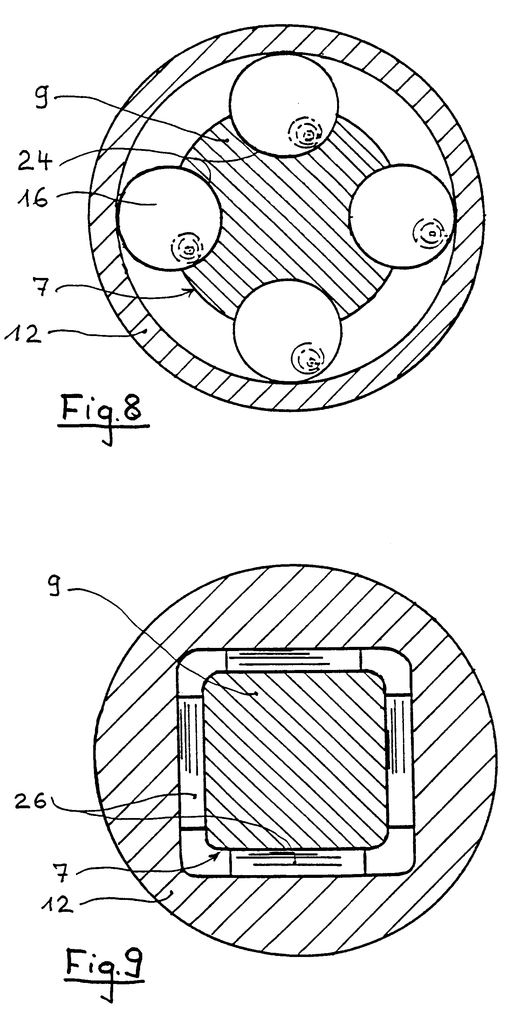

Nach einer anders ausgeführten Weiterbildung entsprechend der Fig. 7 ist das Führungsteil 7 mit beispielsweise quadratischem Grundriß ausgebildet, so daß seine Wandungen 25 und damit die Wälzkörperbahnen eben sind. Auch hier sind aufgrund der Anordnung von Schlitzen 23 zwischen den einzelnen Wandungsteilen 25 diese federnd und damit kraftschlüssig gegen die Wälzkörper angelegt. Bei diesem Ausführungsbeispiel können die Wälzkörper als Rollen oder Nadeln 26 ausgebildet sein, wobei selbstverständlich in der Buchse 12 die entsprechenden Wälzkörperlaufbahnen ebenfalls eben ausgebildet sind und den Wandungsteilen 25 des Führungsteils 7 gegenüberliegen (Fig. 9).

## Patentansprüche

1. Kugelraste, insbesondere für die Schaltwelle von Kraftfahrzeugen, bei der die Rastkugel (4) unter der Wirkung einer in einer Buchse (12) geführten Druckfeder (11) gegen die Schaltwelle anliegt und die Rastkugel (4) an der Schaltwelle in parallelen Nuten geführt ist und von einer Nute zur anderen, die Zwischenkämme überrollend, einrasten kann, wobei die Rastkugel in einer Kugelhalbschale (1) auf kleinen Lagerkugeln (3) gelagert ist und die Druckfeder (11) auf die Kugelhalbschale (1) wirkt, die an ihrer Aussenkante mit einer Erweiterung (19) des Durchmessers versehen ist, die eine freie Beweglichkeit der kleinen Lagerkugeln (3) zuläßt und in ihrem Zentrum mit einer Ausnehmung (18) versehen ist, die eine freie Beweglichkeit der kleinen Lagerkugeln (3) zuläßt und wobei die Kugelhalbschale (1) auf einem Führungsteil (7) sitzt, das seinerseits einen Sitz und eine Führung für die Druckfeder (11) aufweist und in der Buchse (12) mit Wälzkörpern (16) axial-verschieblich geführt ist, **dadurch gekennzeichnet,** daß die Kugelhalbschale (1) sowie die Führungsteile (7) als aus Blech tiefgezogene Teile ausgebildet und mittels Schweißung oder Nietung fest miteinander verbunden sind.

2. Kugelraste nach Anspruch 1, **dadurch gekennzeichnet,** daß durch den Druckpunkt einer verbindenden Punktschweißung zwischen Kugelhalbschale (1) und Führungsteil (7) die mittlere Kugelkalotte (18) als Ausnehmung in dem Kugelbett (2) erzeugt ist.

3. Kugelraste nach einem oder mehreren der vorstehenden Ansprüche, **dadurch gekennzeichnet,** daß das Führungsteil (7) topfförmig ausgebildet ist, wobei der Boden (9) zur flächigen Anlage an der Kugelhalbschale (1) eingewölbt sein kann.

4. Kugelraste nach einem oder mehreren der vorstehenden Ansprüche, **dadurch gekennzeichnet,** daß der Boden (9) des Führungsteils (7) auf seiner Innenseite mit einer vorspringenden Ausformung (10) als Führung für die Druckfeder (11) ausgebildet ist.

5. Kugelraste nach Anspruch 4, **dadurch gekennzeichnet,** daß auf der Innenseite des Bodens (9) des Führungsteils (7) ein Zylinderteil (22) als Führung für die Druckfeder (11) angeordnet ist.

6. Kugelraste nach Anspruch 5, **dadurch gekennzeichnet,** daß das auf die Innenseite des Bodens (9) aufgesetzte Zylinderteil (22) den Kopf der Niete (20) oder Schraube (21) bildet, die die feste Verbindung zwischen Kugelhalbschale (1) und Führungsteil (7) herstellt.

7. Kugelraste nach einem oder mehreren der vorstehenden Ansprüche, **dadurch gekennzeichnet,** daß in geringem Abstand vom Boden (9) des topfförmigen Führungsteils (7) in dessen Wandung eine Einnehmung (10) als Widerlager für die Druckfeder (11) ausgebildet ist.

8. Kugelraste nach einem oder mehreren der vorstehenden Ansprüche, **dadurch gekennzeichnet,** daß der obere Abschluß des Kugelbettes (2) durch einen Haltering als Sprengring (6) ausgebildet ist, der in eine Innennut (5) unmittelbar unterhalb des Randes der Kugelhalbschale (1), jedoch außerhalb des Mittelpunktes der Rastkugel (4) eingesetzt ist - im Abstand von den obersten Kugeln (3) des Kugelbettes und dessen innerer freier Durchmesser geringer ist als der größte Durchmesser der Rastkugel (4).

9. Kugelraste nach einem oder mehreren der vorstehenden Ansprüche, **dadurch gekennzeichnet,** daß am oberen Rand der Kugelhalbschale (1) ein Haltering (6) für die Rastkugel (4) von einer nach innen gerichteten Randumbördelung an der Schale (1) gehalten wird.

10. Kugelraste nach Anspruch 9, **dadurch gekennzeichnet,** daß der freie Innendurchmesser des aus nicht härtbarem, weichen Material bestehenden Halteringes (6) nur etwas geringer ist als der Durchmesser der Rastkugel (4), um ein Durchschnappen der Rastkugel beim Einsetzen zu ermöglichen.

11. Kugelraste nach Anspruch 10, **dadurch gekennzeichnet,** daß der Haltering (6) kegelförmig ausgebildet ist, so daß sein freier Innendurchmesser dem Durchmesser der Rastkugel (4) entspricht und nach dem Einsetzen der Rastkugel unter Verkleinerung seines freien Innendurchmessers in eine ebene Form gedrückt ist.

12. Kugelraste nach einem oder mehreren der vorstehenden Ansprüche 9 bis 11, **dadurch gekennzeichnet,** daß der Haltering, dessen freier Innendurchmesser mindestens gleich dem Rastkugeldurchmesser ist, mit mindestens zwei nach innen stehenden Nasen versehen ist, deren Stirnflächen auf einem kleineren Durchmesser als dem der Rastkugel (4) liegen - zum Durchschnappen und Halten der Rastkugel.

13. Kugelraste nach Anspruch 9, **dadurch gekennzeichnet,** daß der Haltering (6) aus härtbarem Material bestehend, mit mindestens zwei einander gegenüberliegenden Einschnapp- und Haltenasen für die Rastkugel (4) versehen ist.

14. Kugelraste nach einem oder mehreren der vorstehenden Ansprüche, **dadurch gekennzeichnet,** daß die Kugelhalbschale (4), Haltering (6) und Führungsteil (7) aus härtbarem Material bestehen.

15. Kugelraste nach einem oder mehreren der vorstehenden Ansprüche **dadurch gekennzeichnet,** daß das Führungsteil (7) mit mindestens einem achsparallelen Schlitz (23) in seiner zylindrischen Wandung versehen und derart aufgeweitet ist, daß es federnd spielfrei die umgebenden Wälzkörper (16) gegen die Innenseite der Buchse (12) drückt.

16. Kugelraste nach einem oder mehreren der vorstehenden Ansprüche, **dadurch gekennzeichnet,** daß das Führungsteil (7) mit mindestens drei, durch achsparallele Schlitze (23) voneinander getrennten, nach innen gewölbten und damit als Wälzkörperlaufbahn ausgebildeten Wandungsteilen (24) versehen ist, die federnd spielfrei die umgebenden Wälzkörper (16) gegen die Innenseite der Buchse (2) drückt.

17. Kugelraste nach einem oder mehreren der vorstehenden Ansprüche, **dadurch gekennzeichnet,** daß das Führungsteil (7) den Grundriß eines Polygons hat und mindestens drei, durch achsparallele Schlitze voneinander getrennte Wandungsteile aufweist, die als ebene Wälzkörperlaufbahnen (25) ausgebildet sind und federnd spielfrei die Wälzkörper gegen die Innenseite der Buchse drücken, an der die Wälzkörperlaufbahnen ebenfalls eben ausgebildet sind.

18. Kugelraste nach einem oder mehreren der vorstehenden Ansprüche, **dadurch gekennzeichnet,** daß das Führungsteil (7) an dem freien Rand seiner Hülse mit radial nach außen gerichteten Abwinklungen versehen ist, die die Laufbahnen der Wälzkörper begrenzen.

## Claims

1. Ball retainer, in particular for the shifting shaft of motor vehicles, wherein the retainer ball (4) rests against the shifting shaft due to the action of a pressure spring (11) guided in a bushing (12) and the retainer ball (4) is guided along the shifting shaft in parallel grooves and is designed to latch, rolling across the intermediate ridges, into one groove after another, the retainer ball being supported in a ball shell (1) by small bearing balls (3) and the pressure spring (11) acts on the ball shell (1) which is provided on its outer edge with an extension (19) to its diameter, which allows free movement of the small bearing balls (3) and is provided in its centre with a recess (18) allowing free movement of the small bearing balls (3), and wherein the ball shell (1) rests on a guiding portion (7) which in its turn has seating and guiding means for the pressure spring (11) and is guided in an axially shiftable manner in the bushing (12) with rolling members (16), characterised in that both the ball shell (1) and the guiding portions (7) are manufactured from deep-drawn metal sheet components and are firmly connected with each other by welding or riveting.

2. Ball retainer as claimed in Claim 1, characterised in that by the centre of pressure of a spot welding connection between the ball shell (1) and the guiding section (7) the central spherical cap (18) is formed as a recess in the ball bed (2).

3. Ball retainer as claimed in any one or several of the preceding claims, characterised in that the guiding portion (7) is pot-shaped and its base (9) may be vaulted to achieve a large area contact with the ball shell (1).

4. Ball retainer as claimed in one or several of the preceding claims, characterised in that the base (9) of the guiding portion (7) is formed at its inside with a projecting shoulder (10) serving as a guide for the pressure spring (11).

5. Ball retainer as claimed in Claim 4, characterised in that at the inside of the base (9) of the guiding portion (7), a cylinder portion (22) is provided as a guide for the pressure spring (11).

6. Ball retainer as claimed in Claim 5, characterised in that the cylinder portion (22) attached to the inside of the base (9) forms the head of the rivet (22) or bolt (21) creating the firm connection between the ball shell (1) and the guiding portion (7).

7. Ball retainer as claimed in any one or several of the preceding claims, characterised in that at a slight distance from the base (9) of the pot-shaped guiding portion (7), a projection (10) serving as an abutment for the pressure spring (11) is provided in the wall of said guiding portion (7).

8. Ball retainer as claimed in any one or several of the preceding claims, characterised in that the upper end of the ball bed (2) is formed by a retaining ring formed as a snap ring (6) inserted in an inner groove (5) immediately below the edge of the ball shell (1) but offset from the centre of the retainer ball (4) at a distance from the top balls (3) from the ball bed, and having an internal free diameter which is smaller than the largest diameter of the retainer ball (4).

9. Ball retainer as claimed in any one or several of the preceding claims, characterised in that at the upper edge of the ball shell (1), a retaining ring (6) for the retainer ball (4) is fixed to the shell (1) by an inwardly directed edge bead.

10. Ball retainer as claimed in Claim 9, characterised in that the free internal diameter of the retaining ring (6) consisting of a non-hardenable soft material is only slightly smaller than the diameter of the retainer ball (4), in order to allow the retainer ball to push through during the insertion process.

11. Ball retainer as claimed in Claim 10, characterised in that the retaining ring (6) is tapered, so that its free internal diameter corresponds to the diameter of the retainer ball (4) and is deformed to an even shape upon insertion of the retainer ball under reduction of its free internal diameter.

12. Ball retainer as claimed in any one or several of the preceding Claims 9 to 11, characterised in that the retaining ring, the free internal diameter of which is at least equal to the diameter of the retainer ball, is provided with at least two inwardly projecting noses, the face sides of which rest on a diameter smaller than that of the retainer ball (4), to allow the retainer ball to push through and be retained.

13. Ball retainer as claimed in Claim 9, characterised in that the retainer ring (6) is made from a hardenable material and is provided with at least two snap-in and retaining noses for the retainer ball (4).

14. Ball retainer as claimed in any one or several of the preceding claims, characterised in that the ball shell (4), the retaining ring (6) and the guiding portion (7) are made of a hardenable material.

15. Ball retainer as claimed in any one or several of the preceding claims, characterised in that the guiding portion (7) is provided with at least one axially parallel slot (23) in its cylindrical wall and is flared such that it urges the surrounding rolling members (16) against the inside of the bushing (12) in a spring-like and play-free manner.

16. Ball retainer as claimed in any one or several of the preceding claims, characterised in that the guiding portion (7) is provided with at least three wall sections (24) separated from each other by axially parallel slots (23), inwardly vaulted and thus formed as a rolling member run, said wall sections (24) urging the surrounding rolling members (16) against the inside of the bushing (2) in a spring-like and play-free manner.

17. Ball retainer as claimed in any one or several of the preceding claims, characterised in that the guiding portion (7) has a polygonal outline and has at least three wall sections separated from each other by axially parallel slots, said wall sections being formed as even rolling member runs (25) and urging the rolling members against the inside of the bushing, on which the rolling member runs are also even, in a spring-like and play-free manner.

18. Ball retainer as claimed in any one or several of the preceding claims, characterised in that the guiding portion (7) is provided at the free edge of its bushing with radially outwardly directed angles defining the runs of the rolling members.

## Revendications

1. Loqueteau à bille, en particulier pour axe du levier de commande de changement de vitesse de véhicule automobile, dans lequel la bille de loqueteau (4) repose sous l'effet d'un ressort de compression (11) guidé dans une douille (12) contre l'axe du levier de commande de changement de vitesse et la bille de loqueteau (4) est guidée sur l'axe du levier de changement de vitesse dans des gorges parallèles et peut s'encliqueter d'une gorge à l'autre en roulant par dessus les crêtes intermédiaires, la bille de loqueteau étant logée dans une semi-coque ou cuvette à bille (1) sur des petites billes de roulement (3) et le ressort de compression (11) agissant sur la semi-coque, ou cuvette à bille (1), qui est dotée sur son bord extérieur d'un élargissement (19) de diamètre qui autorise une mobilité libre des petites billes de roulement (3) et qui est munie dans son centre d'un évidement (18) qui autorise la libre mobilité des petites billes de roulement (3) et la semi-coque ou cuvette à bille (1) reposant sur une partie de guidage (7), laquelle pour sa part présente un siège et un guidage pour le ressort de compression (11) et qui est menée dans la douille (12) en déplacement axial avec des corps de roulement (16), loqueteau à bille caractérisé en ce que la semicoque ou cuvette à bille (1), ainsi que les parties de guidage (7) sont constituées par des parties en tôle à emboutissage profond et sont raccordées solidement entre elles par soudage ou rivetage.

2. Loqueteau à bille selon la revendication 1, caractérisé en ce que par le point de compression d'une soudure par point de liaison entre la semi-coque à bille (1) et la partie de guidage (7) est produite la calotte sphérique médiane (18) en tant qu'évidement dans le lit à bille (2).

3. Loqueteau à bille selon une ou plusieurs des revendications précédentes, caractérisé en ce que la partie de guidage (7) est conçue en forme de pot, ce en quoi le fond (9) peut être bombé par rapport à l'appui aplati sur la semi-coque ou cuvette à bille (1).

4. Loqueteau à bille selon une ou plusieurs des revendications précédentes, caractérisé en ce que le fond (9) de la partie de guidage (7) est conçu, sur son côté interne, avec une formation faisant saillie (10) comme guidage pour le ressort de compression (11).

5. Loqueteau à bille selon la revendication 4, caractérisé en ce qu'une partie cylindrique (22) est agencée sur le côté interne du fond (9) de la partie de guidage (7) comme guidage pour le ressort de compression (11).

6. Loqueteau à bille selon la revendication 5, caractérisé en ce que la partie cylindrique (22), montée sur le côté interne du fond (9), forme la tête du rivet (20) ou de la vis (21), qui produit la liaison solide entre la semi-coque ou cuvette à bille (1) et la partie de guidage (7).

7. Loqueteau à bille selon une ou plusieurs des revendications précédentes, caractérisé en ce qu'une dépression (10) est formée à faible distance par rapport au fond (9) de la partie de guidage en forme de pot (7) dans la paroi de celui-ci comme contre-palier pour le ressort de compression (11).

8. Loqueteau à bille selon une ou plusieurs des revendications précédentes, caractérisé en ce que la fermeture supérieure du lit à bille (2) est formée par un anneau de maintenue sous forme de jonc (6), qui est logé dans une gorge interne (5), directement au-dessous du bord de la semi-coque à bille (1), toutefois à l'extérieur du point médian de la bille de loqueteau (4) - à une certaine distance des billes supérieures (3) du lit à bille et dont le diamètre libre interne est inférieur au plus grand diamètre de la bille de loqueteau (4).

9. Loqueteau à bille selon une ou plusieurs des revendications précédentes, caractérisé en ce que sur le bord supérieur de la semi-coque ou cuvette à bille (1), est maintenu un anneau de fixation (6) pour la bille de loqueteau (4) à partir d'un bord rabattu dirigé vers l'intérieur sur la coque (1).

10. Loqueteau à bille selon la revendication 9, caractérisé en ce que le diamètre interne libre de l'anneau de fixation (6) constitué par un matériau mou non durcissable n'est que légèrement plus petit que le diamètre de la bille de loqueteau (4) afin de permettre l'enclenchement de la bille de loqueteau lors de l'utilisation.

11. Loqueteau à bille selon la revendication 10, caractérisé en ce que l'anneau de fixation (6) est de forme conique de sorte que son diamètre interne libre correspond au diamètre de la bille de loqueteau (4) et, après mise en place de la bille de loqueteau, il est comprimé par diminution de son diamètre interne libre en une forme plane.

12. Loqueteau à bille selon une ou plusieurs des revendications précédentes 9 à 11, caractérisé en ce que l'anneau de fixation, dont le diamètre interne libre est au moins égal au diamètre de la bille de loqueteau, est muni d'au moins deux talons faisant face vers l'intérieur, dont les faces frontales reposent sur un plus petit diamètre que celui de la bille de loqueteau (4) pour l'enclenchement et le maintien en place de la bille de loqueteau.

13. Loqueteau à bille selon la revendication 9, caractérisé en ce que l'anneau de fixation (6) est constitué par un matériau durcissable, avec au moins deux talons de retenue et d'enclenchement en regard l'un de l'autre pour la bille de loqueteau (4).

14. Loqueteau à bille selon une ou plusieurs des revendications précédentes, caractérisé en ce que la semi-coque ou cuvette à bille (4), l'anneau de fixation (6) et la partie de guidage (7) sont réalisés en un matériau durcissable.

15. Loqueteau à bille selon une ou plusieurs des revendications précédentes, caractérisé en ce que la partie de guidage (7) est dotée d'au moins une fente (23) parallèle à l'axe dans sa paroi cylindrique, et en ce qu'elle est élargie de sorte qu'elle comprime d'une manière élastique, sans jeu mécanique, les corps de roulement avoisinants (16) contre le côté interne de la douille (12).

16. Loqueteau à bille selon une ou plusieurs des revendications précédentes, caractérisé en ce que la partie de guidage (7) est munie d'au moins trois parties de parois (24) formées comme chemins de corps de roulement et courbées vers l'intérieur et séparées entre elles par des fentes parallèles à l'axe (23), parties de parois qui compriment d'une manière élastique, sans jeu, les corps de roulement avoisinants (16) contre le côté interne de la douille (2).

17. Loqueteau à bille selon une ou plusieurs des revendications précédentes, caractérisé en ce que la partie de guidage (7) présente la configuration d'un polygone et comporte au moins trois parties de parois séparées entre elles par des fentes parallèles à l'axe, qui sont formées comme chemins pour les corps de roulement (25) et compriment d'une manière élastique, sans jeu, les corps de roulement contre le côté interne de la douille, sur laquelle sont également formés, d'une manière plane, les chemins pour corps de roulement.

18. Loqueteau à bille selon une ou plusieurs des revendications précédentes, caractérisé en ce que la partie de guidage (7) est munie, sur le bord libre de sa gaine, de coudes dirigés radialement vers l'extérieur et qui délimitent les voies de roulement des corps de roulement.
